# EUROPÄISCHE PATENTSCHRIFT

(11) **EP 1 660 764 B1**
(45) Veröffentlichungstag und Bekanntmachung des Hinweises auf die Patenterteilung: **07.03.2018**
(21) Anmeldenummer: 04741040.2
(22) Anmeldetag: 15.07.2004
(51) Int. Cl.: B60W 20/16, F02D 41/02, B60W 10/06, B60W 10/08

(54) **HYBRIDFAHRZEUG UND VERFAHREN ZUM BETREIBEN EINES HYBRIDFAHRZEUGS**
HYBRID VEHICLE AND METHOD FOR OPERATING A HYBRID VEHICLE
VEHICULE HYBRIDE ET PROCEDE POUR FAIRE FONCTIONNER UN VEHICULE HYBRIDE

(30) Priorität: 20.08.2003 DE 10338871
(43) Veröffentlichungstag der Anmeldung: 31.05.2006
(73) Patentinhaber: Volkswagen Aktiengesellschaft, 38440 Wolfsburg (DE)
(72) Erfinder: POTT, Ekkehard, 38518 Gifhorn (DE)
(86) Internationale Anmeldenummer: PCT/EP2004/007856
(87) Internationale Veröffentlichungsnummer: WO 2005/019628

(56) Entgegenhaltungen:
- EP-A- 1 291 510
- GB-A- 2 326 857
- US-B1- 6 301 529
- US-B1- 6 389 352
- PATENT ABSTRACTS OF JAPAN Bd. 2003, Nr. 10, 8. Oktober 2003 (2003-10-08) -& JP 2003 176737 A (TOYOTA MOTOR CORP), 27. Juni 2003 (2003-06-27)

## Beschreibung

Die Erfindung betrifft ein Hybridfahrzeug und ein Verfahren zum Betreiben eines Hybridfahrzeugs gemäß den Oberbegriffen der unabhängigen Patentansprüche.

Fahrzeuge mit Parallelhybridantrieben verfügen über einen Verbrennungsmotor sowie zumindest einen Elektromotor, der über denselben oder einen anderen Antriebsstrang des Verbrennungsmotors zumindest ein Fahrzeugrad antreibt. Soweit der Elektromotor auch als Generator betrieben werden kann, ist in nahezu jedem Punkt des Fahrzeugbetriebskennfeldes dadurch eine motorische Unterstützung oder generatorische Zusatzbelastung durch den Elektromotor und eine gewisse Entkoppelung vom Verbrennungsmotorbetrieb möglich.

Damit geht eine Änderung der Abgasqualität einher, insbesondere hinsichtlich des Abgasmassenstroms, der Abgastemperatur sowie der Schadstoffzusammensetzung. Eine derartige Änderung der Abgasqualität hat Auswirkungen auf die Funktion und Effizienz eines dem Verbrennungsmotor nachgeschalteten Katalysatorsystems. Aus der EP 1 182 074 A2 ist bekannt, bei einer Katalysatortemperatur unterhalb einer charakteristischen Anspringtemperatur (Light-Off-Temperatur) durch generatorischen Betrieb des Elektromotors die Last des Verbrennungsmotors zu erhöhen und damit eine erhöhte Abgastemperatur und ein schnelleres Anspringen des Katalysatorsystems nach einem Kaltstart zu erreichen. Ferner wird vorgeschlagen, bei betriebswarmem Motor bzw. betriebswarmen Katalysatorsystem durch motorischen Betrieb des Elektromotors eine Entlastung des Verbrennungsmotors herbeizuführen.

Für die Kohlenwasserstoff (HC)- Konvertierung, insbesondere in einem Vorkatalysator gilt, dass bei Mager- und Schichtbetrieb eine stärkere Auskühlung als im rein stöchiometrischen Betrieb stattfindet. In langen, mager betriebenen Schwachlastphasen kann die Vorkatalysatortemperatur die erwähnte Anspringtemperatur unterschreiten, so dass eine Magerbetriebsunterdrückung erforderlich ist. Dies gilt insbesondere bei bereits gealterten Katalysatoren.

Ebenso weisen NOx-Speicherkatalysatoren Betriebsgrenzen auf, die für eine hoch effiziente NOx-Einlagerung im Magerbetrieb zur Einhaltung von Emissionsvorschriften beachtet werden müssen. Diese Betriebsgrenzen umfassen insbesondere eine Minimal- und Maximaltemperatur, einen maximal zulässigen NOx-Massenstrom stromauf des Speicherkatalysators, sowie einen maximal zulässigen Abgasmassenstrom. Bei Überschreiten einer dieser Grenzen muss zur Gewährleistung der Emissionssicherheit der Magerbetrieb zugunsten des stöchiometrischen Betriebs unterdrückt werden. Mit zunehmender Alterung des Katalysators werden diese Grenzen immer enger.

Aus der WO 00/23 295 A1 ist ein direkt einspritzender schichtladefähiger Verbrennungsmotor bekannt, der direkt mit einem Elektromotor gekoppelt ist. Um einen Magerbetrieb zu ermöglichen und die Abgastemperaturen in einem Bereich zu halten, in dem Emissionsvorschriften eingehalten werden können, wird der Elektromotor zu bestimmten Zeiten in einen Generatorbetrieb versetzt. Dem Verbrennungsmotor ist ein Katalysatorsystem zugeordnet, dass insbesondere eine Stickoxid (NOx)-Falle umfasst. Die NOx-Falle weist ein Temperaturfenster für einen korrekten Betrieb zwischen 250°C und 450°C auf.

Aus der DE 199 35 826 A1 ist eine Drehmomentsteuerung für Direkteinspritzer mit Hilfe einer zusätzlichen Drehmomentvorrichtung bekannt. Während eines Übergangs von einer Betriebsart des Motors mit einem mageren Luft-/Kraftstoffverhältnis zu einem fetten Luft-/Kraftstoffverhältnis sorgt die zusätzliche Drehmomentvorrichtung dafür, dass eine gewünschte Drehmomentabgabe des Motors aufrechterhalten wird.

Ferner ist aus der US 6 301 529 B1 ein Hybridfahrzeug bekannt, bei dem die Geschwindigkeit des Verbrennungsmotors und die Ausgangsleistung des Elektromotors so kontrolliert werden, dass das Fahrzeug in einem bestimmten Punkt einer NOx-Kontur betrieben werden kann. Ferner ist aus der WO 92/15 778 A1 ein Verbrennungsmotor mit einer Vorrichtung bekannt, um das Gesamtdrehmoment zumindest in einem Teil des Geschwindigkeit-/Lastbereichs durch einen zusätzlichen Antrieb zu unterstützen. Der Verbrennungsmotor soll auf diese Weise in einem Bereich des Magerbetriebs gehalten werden. Das zusätzliche Drehmoment wird hierbei als Ersatz für einen Fettbetrieb des Verbrennungsmotors verwendet.

Aus der GB 2 326 857 A ist ferner ein Hybridfahrzeug bekannt, dem ein Katalysatorsystem in einem optimalen Temperaturbereich gehalten werden kann.

Aus den Dokumenten JP 11223 140 A, JP 2000035 149 A, JP 200011 0604 A und JP 2001115 869 A sind ferner Hybridfahrzeuge bekannt, bei denen Maßnahmen zur Temperaturbeeinflussung eines Katalysators in Abhängigkeit von der Generatorleistung vorgesehen sind.

Eine optimale Erfassung und Steuerung der Interaktion zwischen dem Katalysatorsystem und dem aus Verbrennungs- und Elektromotor bestehenden Hybridsystem, ist mit dem Verfahren aus dem bekannten Stand der Technik noch nicht möglich.

Aufgabe der vorliegenden Erfindung ist es daher, ein Hybridfahrzeug und ein Verfahren zum Betreiben eines Hybridfahrzeugs zu schaffen, bei denen die Interaktion zwischen dem aus Verbrennungs- und Elektromotor bestehenden Hybridsystem und einem dem Verbrennungsmotor zugeordneten Katalysatorsystem zur Erreichung eines geringen Kraftstoffverbrauchs und einer geringen Schadstoffemission optimiert ist.

Die angegebene Aufgabe wird durch die Merkmale der unabhängigen Patentansprüche gelöst.

Bei dem erfindungsgemäßen Verfahren ist vorgesehen, dass zumindest ein Wert einer Katalysatoraktivität ermittelt und mit zumindest einem vorgegebenen Grenzwert verglichen wird und in Abhängigkeit von dem Vergleichsergebnis und von einem Zustandswert eines Energiespeichers eine motorische oder generatorische Drehmomentaddition M_E des Elektromotors erfolgt. Damit ist es möglich, den Betriebspunkt des Verbrennungsmotors optimal an den Wert der momentanen Katalysatoreffizienz anzupassen und damit den Zielkonflikt zwischen Emissionssicherheit und geringen Kraftstoffverbrauch zu lösen.

Besonders bevorzugt ist es, wenn ein Wert eines Abgasmassenstroms durch die Drehmomentaddition M_E gezielt beeinflusst wird, da dann, besonders einfach und direkt ein verbrauchsgünstiger Betrieb des Verbrennungsmotors eingestellt werden kann, ohne die Schadstoffemission stromab des Katalysatorsystems zu erhöhen.

Die Vorteile der Erfindung kommen insbesondere bei einem Verbrennungsmotor zum Tragen, der einen Magerbetrieb in zumindest einer homogenen oder geschichteten Phase zulässt, da diese einerseits verbrauchsgünstig sind, andererseits jedoch hohe Anforderungen an die Einhaltung von Betriebsgrenzen des Katalysatorsystems stellen.

Das erfindungsgemäße Hybridfahrzeug weist einen Verbrennungsmotor und einen Elektromotor, jeweils zur Abgabe eines Drehmoments zum Betrieb des Fahrzeugs, insbesondere um zumindest ein Fahrzeugrad antreiben zu können auf, wobei dem Verbrennungsmotor einer Abgasanlage mit einem Katalysatorsystem für zumindest eine Abgaskomponente zugeordnet und eine Energiespeichereinrichtung zur Speicherung und Wiederabgabe elektrischer Energie vorgesehen ist. Ferner ist eine Einrichtung vorgesehen, um zumindest einen Wert einer Katalysatoraktivität zu ermitteln und mit zumindest einem vorgegebenen Grenzwert zu vergleichen, wobei in Abhängigkeit vom Vergleichsergebnis und von einem Zustandswert des Energiespeichers eine motorische oder generatorische Drehmomentaddition M_E des Elektromotors erfolgt.

Besonders hohe Abgasreinigungsleistungen lassen sich mit einem Katalysatorsystem erreichen, welches zumindest einen motornahen Vorkatalysator und zumindest einen stromab des Vorkatalysators angeordneten Hauptkatalysator umfasst.

Weitere Ausführungsformen und Vorteile der Erfindung sind auch unabhängig von Ihrer Zusammenfassung und in den Patentansprüchen der nachfolgenden Beschreibung und den Zeichnungen zu entnehmen.

Die Zeichnungen zeigen
- Fig. 1: einen Hybridantrieb mit Steuersystem für ein erfindungsgemäßes Hybridfahrzeug
- Fig. 2: eine Darstellung von Betriebspunktverlagerungen eines Verbrennungsmotors für verschiedene Werte eines NOx-Massenstroms und einer NOx-Speicherkatalysatortemperatur
- Fig. 3: eine Darstellung von Betriebspunktverlagerungen eines Verbrennungsmotors mit einem Last-/Drehzahlkennfeld und gleichzeitiger Darstellung von NOx-Konturlinien.

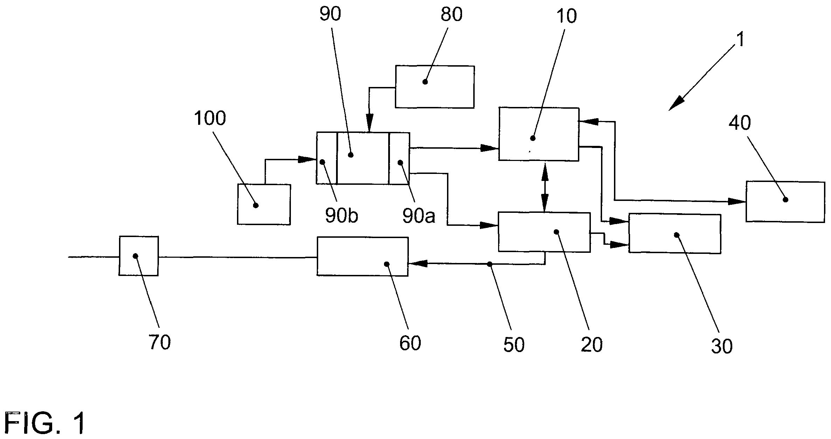

Figur 1 zeigt in schematischer Darstellung einen Hybridantrieb 1 für ein ansonsten nicht dargestelltes Hybridfahrzeug. Ein Elektromotor 10 und ein Verbrennungsmotor 20 sind mit einem Getriebe 30 gekoppelt, das mit zumindest einem - in der Figur 1 nicht dargestellten - Fahrzeugrad gekoppelt ist. Bevorzugt ist eine Anordnung des Elektromotors 10 zwischen einem Kurbelwellenausgang des Verbrennungsmotors 20 und einem Getriebeeingang. Der Elektromotor 10 ist mit einer elektrischen Energiespeichereinrichtung 40, beispielsweise einer aufladbaren Batterie oder dergleichen, elektrisch gekoppelt. Als Energiespeichereinrichtung 40 kommt insbesondere eine Kombination aus einer Batterie, z. B. Blei, Ni-MH und einem Kondensatorspeicher in Frage. Hochleistungskondensatoren haben den Vorteil eines geringen Gewichts, einer hohen Lebensdauer und eines sehr geringen Wartungsaufwands. Insbesondere Doppelschichtkondensatoren sind als Kurzzeitspeicher zur Stützung der Batterie vorteilhaft. Bevorzugt ist erfindungsgemäß ein Kondensatorspeicher mit einem maximalen Energiegehalt von 5 ... 30%, ideal 10 ... 20% des Energieinhalts der Batterie. Die Ladung des Kondensatorspeichers sowie auch der Batterie kann auch durch Rekuperation erfolgen. Dem Verbrennungsmotor 20 ist eine Abgasanlage 50 mit einem motornahen Vorkatalysator 60 und einem stromab angeordneten Hauptkatalysator 70 zugeordnet. Ein Motorsteuergerät 90 empfängt von Steuersensoren 80, beispielsweise dem Fahrpedalmodul oder einem Antiblockiersystem, Steuersignale sowie von Sensoren 100, Werte von Betriebsparametern des Hybridfahrzeugs, insbesondere des Elektromotors 10, des Verbrennungsmotors 20, der Abgasanlage 50 sowie weiterer Fahrzeugkomponenten.

In einer bevorzugten Ausführungsform der Erfindung ist der Verbrennungsmotor 20 ein magerlauffähiger, vorzugsweise direkt einspritzender Otto-Motor. Besonders bevorzugt ist ein schichtladefähiger direkt einspritzender Otto-Motor, da damit in unteren Last-Drehzahlbereichen beträchtliche Einsparungen am Kraftstoffverbrauch gegenüber einem konventionellen Otto-Motor zu erreichen sind. Insbesondere bei diesen Ausbildungsformen der Erfindung ist es zweckmäßig, das Katalysatorsystem derart auszubilden, dass der Vorkatalysator 60 ein 3-Wegekatalysator und der Hauptkatalysator 70 ein NOx-Speicherkatalysator ist. Der Vorkatalysator 60 dient vorzugsweise zur Reinigung eines stöchiometrischen Abgases, zur Konvertierung von Kohlenwasserstoffen (HC) bei magerem Abgas und zur Verbesserung der Abgasreinigung bei einem Kaltstart. Insbesondere, um eine schnelle Aufheizung des Vorkatalysators zu ermöglichen, ist vorgesehen, dass der Vorkatalysator 60 in einem Abstand von weniger als 500 mm, optional weniger als 400 mm, besonders bevorzugt weniger als 300 mm mittlerer Abgaslauflänge der Zylinderkopfflansch in der Abgasanlage 50 angeordnet ist. Der NOx-Speicherkatalysator 70 ist vorzugsweise zur Speicherung von Stickoxiden (NOx) bei magerem Abgas ausgelegt. In Abhängigkeit von der Beladung mit NOx und unter Umständen noch weiteren Randbedingungen ist eine Regeneration des NOx-Speicherkatalysators mit einem stöchiometrischen bis fetten Abgas erforderlich.

Die Konversionsaktivität des Katalysatorsystems bzw. seiner Komponenten Vorkatalysator 60 und NOx-Speicherkatalysator 70 ist von Aktivitätsparametern, insbesondere der Katalysatortemperatur, abhängig. Die Konvertierungsrate überschreitet erst ab einer minimalen Temperatur, der sogenannten Light-Off-Temperatur, eine Grenze von beispielsweise 50 %. Im Allgemeinen ist die Light-Off-Temperatur eines Katalysators für verschiedene Schadstoffkomponenten wie HC oder NOx unterschiedlich.

Weitere Aktivitätsparameter des Katalysatorsystems sind Werte eines Abgasmassenstroms, der Rohemission von Abgaskomponenten, insbesondere von NOx, HC sowie Kohlenmonoxid (CO), sowie die Beladung des Systems mit NOx und/oder Schwefeloxiden (SOx). Die Werte dieser Aktivitätsparameter werden in Abhängigkeit von den Betriebsparametern des Verbrennungsmotors, ggf. unter Verwendung eines Modells des Katalysatorsystems unter Zuhilfenahme von Signalen der Sensoren 100, ermittelt und in dem Steuergerät 90 ausgewertet.

Das Steuergerät 90 beinhaltet in einer bevorzugten Ausführungsform einen oder mehrere Mikroprozessoren, Datenspeicher und Schnittstellen sowie eine Einrichtung 90a mittels der in Abhängigkeit von den Steuersignalen der Sensoren 80 das Gesamtdrehmoment bestimmt wird, welches vom Elektromotor 10 und dem Verbrennungsmotor 20 geliefert und zumindest teilweise dem Getriebe 30 zur Verfügung gestellt wird. Die Kopplung zwischen dem Elektromotor 10 und dem Verbrennungsmotor 20 ermöglicht sowohl eine negative als auch eine positive Drehmomentaddition M_E des Elektromotors 10.

Die im Einzelnen in Fig. 1 nicht genauer dargestellten Sensoren 100 umfassen Sensoren zur Messung oder Ermittlung von Betriebsparametern, vorzugsweise der Speichereinrichtung 40, des Elektromotors 10, des Verbrennungsmotors 20 und der Abgasanlage 50. Insbesondere können Lambda-Sonden in der Abgasanlage 50 stromaufwärts oder stromabwärts des Vorkatalysators 60 sowie stromaufwärts oder stromabwärts des Hauptkatalysators 70 angeordnet sein. Ferner können an verschiedenen Orten der Abgasanlage NOx-, SOx- oder HC-Sensoren angeordnet sein. Zur Messung der Temperatur des Abgases oder des Katalysatorsystems können an verschiedenen Einbauorten Temperatursensoren vorgesehen sein.

Das Steuergerät 90 beinhaltet eine Einrichtung 90b zur Ermittlung einer Katalysatoraktivität, wobei Signale der Sensoren 100 ausgewertet werden. Die Einrichtung 90b beinhaltet insbesondere Mittel zum Vergleich der festgestellten Katalysatoraktivität mit Aktivitätsgrenzwerten. In Abhängigkeit von dem Vergleichsergebnis erfolgt eine generatorische oder motorische Drehmomentabgabe des Elektromotors 10, um den Betriebspunkt des Verbrennungsmotors in einen Bereich geringen Kraftstoffverbrauchs und geringer Abgasemission zu halten oder zu verschieben. Die erwähnte Drehmomentabgabe ist ferner abhängig von einem Zustandswert der Energiespeichereinrichtung 40, wie im Folgenden noch genauer beschrieben wird. Da die Aktivitätsparameter des Katalysatorsystems, beispielsweise die Katalysatortemperatur, die Abgastemperatur oder die SOx-Beladung betriebspunktabhängig sind, lässt sich durch die Drehmomentabgabe die Aktivität des Katalysatorsystems gezielt beeinflussen.

Die Katalysatoraktivität des Katalysatorsystems wird bevorzugt durch eine Sauerstoffspeicherfähigkeit und/oder eine NOx-Speicherfähigkeit charakterisiert, wie an sich beispielsweise aus der DE 103 29 599 bekannt ist. Dabei wird die Katalysatoraktivität eines 3-Wege-Katalysators bevorzugt durch seine Sauerstoffspeicherfähigkeit und die Katalysatoraktivität eines NOx-Speicherkatalysators bevorzugt durch seine NOx-Speicherfähigkeit bestimmt. Ferner ist auch eine direkte Messung der Katalysatoraktivität über stromauf bzw. stromab des Katalysatorsystems bzw. seiner Komponenten gemessene Emissionswerte von zumindest einem Schadstoff denkbar.

Die Katalysatoraktivität kann durch Vergiftungs- und Alterungsprozesse sowie dadurch, dass Aktivitätsparameter außerhalb von Grenzwerten liegen, negativ beeinflusst werden, wodurch die für einen emissionssicheren Betrieb zur Verfügung stehenden Betriebsbereiche des Verbrennungsmotors 20 eingeschränkt werden. Erfindungsgemäß wird darauf abgezielt, diese Einschränkung zu verringern oder zu eliminieren.

Bevorzugt wird folgendermaßen vorgegangen: Liegt bei einem aktuellen Betriebspunkt der Wert der Katalysatoraktivität innerhalb zulässiger Grenzwerte, so ist keine motorische Unterstützung durch den Elektromotor 10 erforderlich. Daher kann sogar ein generatorischer Betrieb zugelassen werden. Liegt bei einem aktuellen Betriebspunkt die Katalysatoraktivität für zumindest einen Parameter außerhalb der zulässigen Grenzwerte, so wird zunächst ein Zustandswert der Energiespeichereinrichtung 40 geprüft und in Abhängigkeit von diesem Zustand eine motorische Unterstützung durch den Elektromotor 10 freigegeben. Vorzugsweise charakterisiert der Zustandswert den Ladezustand der Speichereinrichtung 40. Je höher der Ladezustand der Energiespeichereinrichtung 40 ist, um so größer darf eine Abweichung zwischen dem aktuellen Betriebspunkt und dem zu erreichenden Betriebspunkt sein, für den eine motorische Unterstützung des Verbrennungsmotors 20 durch den Elektromotor 10 freigegeben wird. Die motorische Unterstützung ist dabei so gewählt, dass der zu erreichende Betriebspunkt des Verbrennungsmotors 20 in einem Bereich liegt, in dem die Katalysatoraktivität innerhalb der zulässigen Grenzwerte liegt. Vorzugsweise wird durch die motorische Unterstützung eine Absenkung des Abgasmassenstroms zumindest einer Abgaskomponente, des gesamten Abgasmassenstroms oder ein Wert einer Katalysator- oder Abgastemperatur T_Kat angestrebt. Vorzugsweise liegt eine Katalysatortemperatur T_Kat in einem Temperaturfenster TF. Durch eine Drehmomentaddition M_E wird daher erfindungsgemäß eine Katalysatortemperatur T_Kat innerhalb des Temperaturfensters TF eingestellt.

Ferner wird durch eine Drehmomentaddition M_E eine obere Grenze eines Abgasmassenstroms und/oder zumindest einer NOx-, HC- oder CO-Rohemission eingehalten.

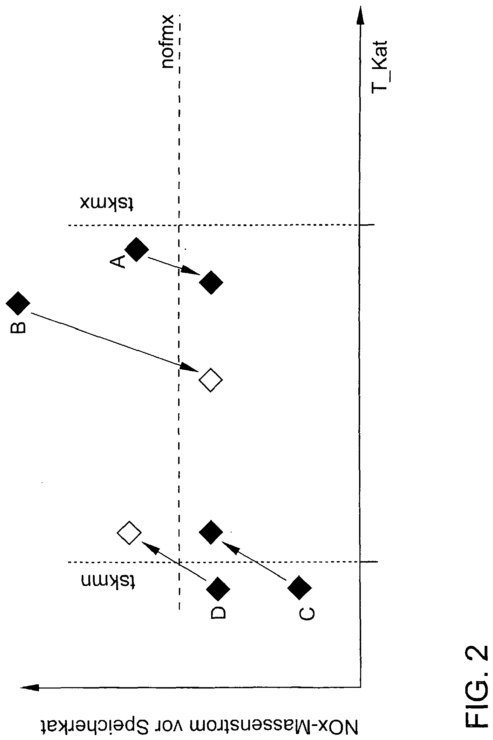

In Figur 2 ist eine Darstellung von Betriebspunktverlagerungen eines Verbrennungsmotors für verschiedene Werte eines NOx-Massenstroms und einer NOx-Speicherkatalysatortemperatur gezeigt, mit der verschiedene Szenarien zur Ermöglichung eines Magerbetriebs illustriert werden sollen. Mit NOx-Massenstrom ist dabei eine Rohemission des Verbrennungsmotors 20 stromauf des NOx-Speicherkatalysators gemeint. Ein Magerbetrieb des Verbrennungsmotors ist nur dann zugelassen, wenn der NOx-Massenstrom einen Wert kleiner als ein Schwellwert SW annimmt; in der Figur 2 als nofmx bezeichnet. Ferner muss der NOx-Speicherkatalysator eine Temperatur in einem Temperaturfenster TF aufweisen, um eine ausreichende Konversionsaktivität zu gewährleisten. Ähnliche Darstellungen wie in Figur 2 für den NOx-Massenstrom sind für den Massenstrom von HC oder CO oder dem Abgasmassenstrom denkbar. Mit A, B, C und D sind jeweils Betriebspunkte des Verbrennungsmotors mit entsprechenden Werten der Aktivitätsparameter NOx-Massenstrom und T_Kat bezeichnet. Ausgehend von einem Betriebspunkt A ist eine motorische Unterstützung des Verbrennungsmotors 20 durch den Elektromotor 10 sinnvoll, wenn die Energiespeichereinrichtung 40 mehr Energie als ein vorgegebener Schwellwert E_SPmx gespeichert hat. Im Fall A sind die zulässigen Grenzen nofmx des NOx-Massenstroms nur geringfügig überschritten und T_Kat liegt unterhalb der Temperatur tskmx. Im Fall B dagegen ist der Wert des NOx-Massenstroms sehr viel größer als der Schwellwert nofmx. Daher ist nur bei fast vollen Energiespeichern, falls die Energiespeichereinrichtung 40 mehr Energie als ein vorgegebener Schwellwert E_SPmx gespeichert hat, eine motorische Unterstützung sinnvoll.

Im Fall C ist der NOx-Massenstrom kleiner als der Schwellwert nofmx und gleichzeitig die Katalysatortemperatur T_Kat kleiner als der Grenzwert tsmm. Durch eine generatorische Unterstützung des Verbrennungsmotors 20 kann eine Temperaturerhöhung und damit ein Betriebspunkt erreicht werden, in dem alle Grenzwerte eingehalten werden. Im Fall D liegt zwar der NOx-Massenstrom unterhalb des Schwellwerts nofmx, jedoch würde durch eine Lastaufschaltung der Schwellwert nofmx überschritten. Eine generatorische Unterstützung ist in dem Fall D daher nicht vorgesehen.

Es versteht sich, dass das oben dargestellte Szenario nicht nur für einen NOx-Massenstrom, sondern auch für einen Abgasmassenstrom, sowie für Rohemissionen weiterer Abgaskomponenten anwendbar ist. Erfindungsgemäß wird daher bei einer Katalysatortemperatur T_Kat innerhalb eines vorgegebenen Temperaturfensters TF1 und einem Abgasmassenstrom und/oder einer Rohemission zumindest einer Abgaskomponente eine motorische Unterstützung durch den Elektromotor vorgesehen, falls die jeweiligen Werte von Abgasmassenstrom bzw. Rohemission größer als ein Schwellwert SW1 sind. Dabei ist keine Unterstützung vorgesehen, falls die Energiespeichereinrichtung weniger Energie als ein vorgegebener Schwellwert E_SPmn gespeichert hat.

Bei einer Katalysatortemperatur T_Kat innerhalb eines vorgegebenen Temperaturfensters TF2 und einen Abgasmassenstrom, der einen Schwellwert SW2 überschreitet, ist eine motorische Unterstützung nicht vorgesehen. Gleiches gilt, wenn die Rohemission zumindest einer Abgaskomponente einen derartigen Schwellwert überschreitet. Allerdings ist eine motorische Unterstützung dann vorgesehen, falls die Energiespeichereinrichtung mehr Energie als ein vorgegebener Schwellwert E_SPmx gespeichert hat.

Bei einer Katalysatortemperatur T_Kat unterhalb einer Grenztemperatur T_mn erfolgt eine generatorische Unterstützung, wenn ein Wert der Katalysatortemperatur T_Kat in einem Temperaturfenster TF3 und/oder ein Abgasmassenstrom und/oder eine Rohemission zumindest einer Abgaskomponente kleiner als ein Schwellwert SW3 erreicht werden kann. Bevorzugt ist hierbei, dass der Übergang innerhalb eines vorgegebenen Zeitintervalls t_I erreicht werden kann. Die Grenztemperatur T_mn kann auch innerhalb eines üblichen Betriebstemperaturfensters des Katalysators liegen.

Bei einer Temperatur-T_Kat unterhalb einer Grenztemperatur T_mn1 erfolgt eine generatorische Unterstützung nicht, falls ein Wert der Katalysatortemperatur T_Kat in einem Temperaturfenster TF4 erreicht und gleichzeitig zumindest ein Abgasmassenstrom und/oder die Rohemission zumindest einer Abgaskomponente nicht kleiner als ein Grenzwert SW4 erreicht werden kann. Vorzugsweise kann hierfür auch ein Zeitintervall t_I1 als Zeitlimitierung eingesetzt werden.

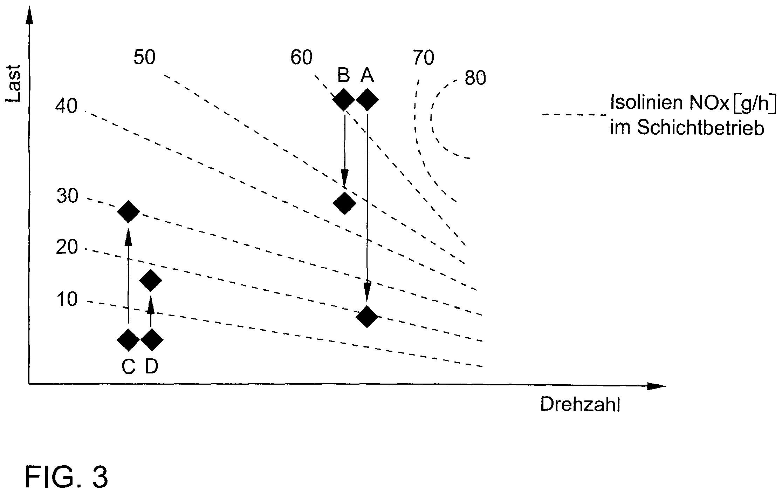

In Figur 3 ist eine Darstellung von Betriebspunktverlagerungen in einem Last-Drehzahlfeld gezeigt. In das Feld sind die Isolinien der stündlichen NOx-Rohemissionen im Schichtbetrieb eines mager betriebenen Verbrennungsmotors eingezeichnet, die mit 10, 20, ... 80 bezeichnet sind. Mit zunehmender Last des Verbrennungsmotors steigt die Rohemission NOx. Mit A, B, C und D sind jeweils Betriebspunktverlagerungen mit motorischer bzw. generatorischer Unterstützung in Abhängigkeit vom Zustand der Energiespeichereinrichtung bezeichnet. A bezeichnet die maximale motorische Unterstützung, für von einer Isolinie mit einem hohen NOx-Wert zu einer Isolinie mit einem niedrigen NOx-Wert durch die Betriebspunktverlagerung übergegangen wird. Der Übergang A setzt eine Energiespeichereinrichtung 40 voraus, die Energie mehr als ein vorgegebener Schwellwert gespeichert hat. Der Übergang B zeigt im Vergleich die Situation bei einem geringeren Wert gespeicherter Energie. Bei weitgehend entladener Energiespeichereinrichtung 40 ist keine motorische Unterstützung vorgesehen.

Eine geleerte Energiespeichereinrichtung 40 kann wie in den Fällen C und D dargestellt ist, durch eine generatorische Lastaufschaltung des Verbrennungsmotors 20 geladen werden. Dabei zeigt der Fall C die Situation bei einer weitgehend geladenen Energiespeichereinrichtung und der Fall D die Situation bei einer teilentladenen Speichereinrichtung. Bei einer weitgehend gefüllten Energiespeichereinrichtung ist keine generatorische Lastaufschaltung vorgesehen. Falls die NOx-Emissionen stromauf des Speicherkatalysators mit der Last des Verbrennungsmotors ansteigen, ist es vorteilhaft, wenn durch eine Betriebspunktverlagerung des Verbrennungsmotors in Richtung niedriger Lasten eine Minderung der NOx-Regenerationshäufigkeit erreicht wird, da dies zu einer Verbrauchsminderung führen kann.

In einem vorzugsweise in dem Motorsteuergerät 90 implementierten Modell werden Werte einer Last-Drehzahl-Betriebspunktverlagerung des Verbrennungsmotors mit Werten einer NOx-Rohemission korreliert und bei der Bemessung der Drehmomentabgabe des Elektromotors zur Verminderung des Gesamtenergieeinsatzes bei dem Betrieb des Fahrzeugs berücksichtigt. Dies ist auch für Werte des Abgasmassenstroms und/oder der Rohemissionen von weiteren Abgaskomponenten denkbar.

Ferner kann in einem Modell eine Regenerationshäufigkeit des Katalysatorsystems 40, vorzugsweise eines NOx-Speicherkatalysators und/oder der Energiespeichereinrichtung mit einem Energieaufwand korreliert werden und bei der Bemessung der Drehmomentabgabe durch den Elektromotor 10 zur Erreichung eines minimalen Gesamtenergieaufwands im Betrieb des Fahrzeugs berücksichtigt werden. Als weitere zu berücksichtigende Parameter sind hierbei die Temperaturgrenzen des Katalysatorsystems zu berücksichtigen, d. h., dass die Katalysatortemperatur T_Kat innerhalb eines vorgegebenen Temperaturfensters TF5 liegt.

Eine Verminderung des Gesamtenergieaufwands zum Betrieb des Fahrzeugs resultiert insbesondere dann, wenn die elektrische Energie aus Schubphasen mittels Rekuperation gewonnen wird. Diese Maßnahme wird zweckmäßigerweise wieder abgängig von dem Ladezustand der Energiespeichereinrichtung 40 angewendet.

## Patentansprüche

1. Verfahren zum Betreiben eines Hybridfahrzeugs mit einem Verbrennungsmotor und zumindest einem Elektromotor, jeweils zur Abgabe eines Drehmoments zum Betrieb des Fahrzeugs, insbesondere um zumindest ein Fahrzeugrad antreiben zu können, wobei dem Verbrennungsmotor eine Abgasanlage mit einem Katalysatorsystem für zumindest eine Abgaskomponente zugeordnet und eine Energiespeichereinrichtung zur Speicherung und Wiederabgabe elektrischer Energie vorgesehen ist und zumindest ein Wert einer Katalysatoraktivität ermittelt und mit zumindest einem vorgegebenen Grenzwert verglichen wird und in Abhängigkeit von dem Vergleichsergebnis und von einem Zustandswert des Energiespeichers eine motorische oder generatorische Drehmomentaddition M_E zumindest eines Elektromotors zur gezielten Beeinflussung von Aktivitätsparametern des Katalysatorsystems erfolgt, **dadurch gekennzeichnet, dass** bei einer Katalysatortemperatur T_Kat innerhalb eines vorgegebenen Temperaturfensters TF1 und einem Abgasmassenstrom und/oder einer Rohemission zumindest einer Abgaskomponente, der oder die größer als ein Schwellwert SW1 ist, eine motorische Unterstützung durch den Elektromotor vorgesehen ist und keine Unterstützung vorgesehen ist, falls die Energiespeichereinrichtung weniger Energie als ein vorgegebener Schwellwert E_SPmn gespeichert hat.

2. Verfahren nach Anspruch 1, **dadurch gekennzeichnet, dass** ein Wert eines Abgasmassenstroms und/oder einer Rohemission zumindest einer Abgaskomponente, vorzugsweise eines Stickoxids, eines Kohlenwasserstoffs oder Kohlenmonoxids, durch die Drehmomentaddition M_E gezielt beeinflusst wird.

3. Verfahren nach Anspruch 1 oder 2, **dadurch gekennzeichnet, dass** der Verbrennungsmotor einen Magerbetrieb in zumindest einer homogenen oder geschichteten Phase zulässt.

4. Verfahren nach zumindest einem der vorhergehenden Ansprüche, **dadurch gekennzeichnet, dass** das Katalysatorsystem zumindest einen 3-Wege-Katalysator oder einen NOx-Speicherkatalysator aufweist.

5. Verfahren nach zumindest einem der vorhergehenden Ansprüche, **dadurch gekennzeichnet, dass** die Katalysatoraktivität durch eine NOx-Speicherfähigkeit oder eine Sauerstoffspeicherfähigkeit charakterisiert ist.

6. Verfahren nach zumindest einem der vorhergehenden Ansprüche, **dadurch gekennzeichnet, dass** durch die Drehmomentaddition M_E ein Wert einer Katalysatortemperatur T_Kat innerhalb eines vorgegebenen Temperaturfensters TF eingestellt wird.

7. Verfahren nach Anspruch 6, **dadurch gekennzeichnet, dass** durch die Drehmomentaddition M_E eine obere Grenze eines Abgasmassenstroms und/oder zumindest einer NOx-, HC oder CO-Rohemission eingehalten wird.

8. Verfahren nach zumindest einem der vorhergehenden Ansprüche, **dadurch gekennzeichnet, dass** bei einer Katalysatortemperatur T_Kat innerhalb eines vorgegebenen Temperaturfensters TF2 und einem Abgasmassenstrom und/oder einer Rohemission zumindest einer Abgaskomponente der oder die einen Schwellwert SW2 überschreitet, eine motorische Unterstützung nicht vorgesehen ist.

9. Verfahren nach Anspruch 8, **dadurch gekennzeichnet, dass** eine motorische Unterstützung vorgesehen ist, falls die Energiespeichereinrichtung mehr Energie als einen vorgegebenen Schwellwert E_SPmx gespeichert hat.

10. Verfahren nach zumindest einem der vorhergehenden Ansprüche, **dadurch gekennzeichnet, dass** bei einer Katalysatortemperatur T_Kat unterhalb einer Grenztemperatur T_mn eine generatorische Unterstützung erfolgt, falls innerhalb eines vorgegebenen Zeitintervalls t_I ein Wert der Katalysatortemperatur T_Kat in einem Temperaturfenster TF3 und/oder ein Abgasmassenstrom und/oder eine Rohemission zumindest einer Abgaskomponente kleiner als ein Schwellwert SW3 erreicht werden kann.

11. Verfahren nach zumindest einem der vorhergehenden Ansprüche, **dadurch gekennzeichnet, dass** bei einer Katalysatortemperatur T_Kat unterhalb einer Grenztemperatur T_mn1 eine generatorische Unterstützung nicht erfolgt, falls nicht innerhalb eines vorgegebenen Zeitintervalls t_I1 ein Wert der Katalysatortemperatur T_Kat in einem Temperaturfenster TF4 und ein Abgasmassenstrom und/oder eine Rohemission zumindest einer Abgaskomponente nicht kleiner als ein Grenzwert SW4 erreicht wird.

12. Verfahren nach zumindest einem der vorhergehenden Ansprüche, **dadurch gekennzeichnet, dass** in einem Modell Werte einer Last-Drehzahl-Betriebspunktverlagerung des Verbrennungsmotors mit Werten eines Abgasmassenstroms und/oder einer Rohemission zumindest einer Abgaskomponente korreliert sind und bei der Bemessung der Drehmomentabgabe des Elektromotors zur Verminderung des Gesamtenergieaufwandes beim Betrieb des Fahrzeugs berücksichtigt werden.

13. Verfahren nach zumindest einem der vorhergehenden Ansprüche, **dadurch gekennzeichnet, dass** in einem Modell der Betrieb des Katalysatorsystems und/oder der Betrieb der Energiespeichereinrichtung mit einem Energieaufwand korreliert ist und bei der Bemessung der Drehmomentabgabe durch den Elektromotor zur Verminderung des Gesamtenergieaufwands zum Betrieb des Fahrzeugs berücksichtigt wird.

14. Verfahren nach zumindest einem der vorhergehenden Ansprüche, **dadurch gekennzeichnet, dass** in einem Modell der Betrieb des Katalysatorsystems hinsichtlich der Regenerationshäufigkeit eines Katalysators und/oder der Betrieb der Energiespeichereinrichtung mit einem Energieaufwand korreliert ist und bei der Bemessung der Drehmomentabgabe durch den Elektromotor zur Verminderung des Gesamtenergieaufwands zum Betrieb des Fahrzeugs berücksichtigt wird.

15. Verfahren nach zumindest einem der vorhergehenden Ansprüche, **dadurch gekennzeichnet, dass** ein Betriebspunkt des Verbrennungsmotors in Richtung niedrigerer Lasten zur Verminderung der Regenerationshäufigkeit eines Katalysators verlegt wird.

16. Verfahren nach Anspruch 16, **dadurch gekennzeichnet, dass** die Katalysatortemperatur T_Kat innerhalb eines vorgegebenen Temperaturfensters T_F5 liegt.

17. Verfahren nach zumindest einem der vorhergehenden Ansprüche, **dadurch gekennzeichnet, dass** eine Gewinnung von elektrischer Energie in Schubphasen des Verbrennungsmotors zur Ladung der Energiespeichereinrichtung vorgesehen ist.

18. Hybridfahrzeug mit einem Verbrennungsmotor und zumindest einem Elektromotor, jeweils zur Abgabe eines Drehmoments zum Betrieb des Fahrzeugs, insbesondere um zumindest ein Fahrzeugrad antreiben zu können, wobei dem Verbrennungsmotor eine Abgasanlage mit einem Katalysatorsystem für zumindest eine Abgaskomponente zugeordnet und eine Energiespeichereinrichtung zur Speicherung und Wiederabgabe elektrischer Energie vorgesehen ist und eine Einrichtung vorgesehen ist, mittels der ein Wert von zumindest einer Katalysatoraktivität ermittelt und mit zumindest einem vorgegebenen Grenzwert verglichen wird, wobei in Abhängigkeit von dem Vergleichsergebnis und von einem Zustandswert des Energiespeichers eine motorische oder generatorische Drehmomentaddition M_E des Elektromotors zur gezielten Beeinflussung von zumindest einem Aktivitätsparameter des Katalysatorsystems erfolgt, **dadurch gekennzeichnet, dass** die Einrichtung derart ausgebildet ist, dass bei einer Katalysatortemperatur T_Kat innerhalb eines vorgegebenen Temperaturfensters TF1 und einem Abgasmassenstrom und/oder einer Rohemission zumindest einer Abgaskomponente, der oder die größer als ein Schwellwert SW1 ist, eine motorische Unterstützung durch den Elektromotor vorgesehen ist und keine Unterstützung vorgesehen ist, falls die Energiespeichereinrichtung weniger Energie als einen vorgegebenen Schwellwert E_SPmn gespeichert hat.

## Claims

1. Method for operating a hybrid vehicle having an internal combustion engine and at least one electric motor, each for outputting a torque to operate the vehicle, in particular to be able to drive at least one vehicle wheel, wherein the internal combustion engine is assigned an exhaust system with a catalytic converter system for at least one exhaust gas component and an energy storage device is provided for storing and outputting electrical energy again, and at least one value of a catalytic converter activity is determined and compared with at least one predefined limiting value, and a motor or generator torque addition M_E of at least one electric motor is carried out as a function of the comparison result and of a state value of the energy store in order to influence activity parameters of the catalytic converter system in a targeted fashion, **characterized in that** in the case of a catalytic converter temperature T_Kat within a predefined temperature window TF1 and an exhaust gas mass flow and/or a raw emission of at least one exhaust gas component which is/are greater than a threshold value SW1, motor assistance is provided by the electric motor and no assistance is provided if the energy storage device has stored less energy than a predefined threshold value E_SPmn.

2. Method according to Claim 1, **characterized in that** a value of an exhaust gas mass flow and/or of a raw emission of at least one exhaust gas component, preferably a nitrogen oxide, a hydrocarbon or carbon monoxide, is influenced in a targeted fashion by the torque addition M_E.

3. Method according to Claim 1 or 2, **characterized in that** the internal combustion engine permits a lean mode in at least one homogeneous or layered phase.

4. Method according to at least one of the preceding claims, **characterized in that** the catalytic converter system has at least one 3-way catalytic converter or one NOx storage-type catalytic converter.

5. Method according to at least one of the preceding claims, **characterized in that** the catalytic converter activity is **characterized by** an NOx storage capacity or an oxygen storage capacity.

6. Method according to at least one of the preceding claims, **characterized in that** a value of a catalytic converter temperature T_Kat is set within a predefined temperature window TF by the torque addition M_E.

7. Method according to Claim 6, **characterized in that** an upper limit of an exhaust gas mass flow and/or of at least one raw emission of NOx, HC or CO is complied with by the torque addition M_E.

8. Method according to at least one of the preceding claims, **characterized in that** motor assistance is not provided in the case of a catalytic converter temperature T_Kat within a predefined temperature window TF2 and an exhaust gas mass flow and/or a raw emission of at least one exhaust gas component which exceed(s) a threshold value SW2.

9. Method according to Claim 8, **characterized in that** motor assistance is provided if the energy storage device has stored more energy than a predefined threshold value E_SPmx.

10. Method according to at least one of the preceding claims, **characterized in that,** in the case of a catalytic converter temperature T_Kat below a limiting temperature T_mn, generator assistance takes place if a value of the catalytic converter temperature T_Kat in a temperature window TF3 and/or an exhaust gas mass flow and/or a raw emission of at least one exhaust gas component which is lower than a threshold value SW3 can be achieved within a predefined time interval t_I.

11. Method according to at least one of the preceding claims, **characterized in that,** in the case of a catalytic converter temperature T_Kat below a limiting temperature T_mn1, generator assistance does not take place if a value of the catalytic converter temperature T_Kat in a temperature window TF4 and an exhaust gas mass flow and/or a raw emission of at least one exhaust gas component which is not lower than a limiting value SW4 is not achieved within a predefined time interval t_I1.

12. Method according to at least one of the preceding claims, **characterized in that,** in a model, values of a load/rotational speed operating point shift of the internal combustion engine are correlated with values of an exhaust gas mass flow and/or a raw emission of at least one exhaust gas component and are taken into account in the dimensioning of the outputting of torque by the electric motor in order to reduce the overall energy expenditure during the operation of the vehicle.

13. Method according to at least one of the preceding claims, **characterized in that,** in a model, the operation of the catalytic converter system and/or the operation of the energy storage device are/is correlated with an energy expenditure and are/is taken into account in the dimensioning of the outputting of torque by the electric motor in order to reduce the overall energy expenditure for operating the vehicle.

14. Method according to at least one of the preceding claims, **characterized in that,** in a model, the operation of the catalytic converter system with respect to the regeneration frequency of a catalytic converter and/or the operation of the energy storage device are/is correlated with an energy expenditure and are/is taken into account in the dimensioning of the outputting of torque by the electric motor in order to reduce the overall energy expenditure for operating the vehicle.

15. Method according to at least one of the preceding claims, **characterized in that** an operating point of the internal combustion engine is shifted in the direction of relatively low loads in order to reduce the regeneration frequency of a catalytic converter.

16. Method according to Claim 16, **characterized in that** the catalytic converter temperature T_Kat lies within a predefined temperature window T_F5.

17. Method according to at least one of the preceding claims, **characterized in that** an acquisition of electrical energy is provided in overrun phases of the internal combustion engine for charging the energy storage device.

18. Hybrid vehicle having an internal combustion engine and at least one electric motor, each for outputting a torque to operate the vehicle, in particular to be able to drive at least one vehicle wheel, wherein the internal combustion engine is assigned an exhaust system with a catalytic converter system for at least one exhaust gas component and an energy storage device is provided for storing and outputting electrical energy again, and a device is provided by means of which a value of at least one catalytic converter activity is determined and compared with at least one predefined limiting value, wherein a motor or generator torque addition M_E of the electric motor is carried out as a function of the comparison result and of a state value of the energy store in order to influence at least one activity parameter of the catalytic converter system in a targeted fashion, **characterized in that** the device is embodied in such a way that in the case of a catalytic converter temperature T_Kat within a predefined temperature window TF1 and an exhaust gas mass flow and/or a raw emission of at least one exhaust gas component which is/are greater than a threshold value SW1, motor assistance is provided by the electric motor and no assistance is provided if the energy storage device has stored less energy than a predefined threshold value E_SPmn.

## Revendications

1. Procédé pour faire fonctionner un véhicule hybride avec un moteur à combustion interne et au moins un moteur électrique, pour fournir respectivement un couple moteur en vue de faire fonctionner le véhicule, en particulier pour pouvoir entraîner au moins une roue du véhicule, dans lequel une installation de gaz d'échappement avec un système de catalyseur pour au moins un composant des gaz d'échappement est associée au moteur à combustion interne et il est prévu un dispositif d'accumulation d'énergie pour l'accumulation et la restitution d'énergie électrique, et on détermine au moins une valeur d'une activité du catalyseur et on la compare à au moins une valeur limite prédéterminée et, en fonction du résultat de la comparaison et d'une valeur d'état de l'accumulateur d'énergie, on opère une addition des couples moteurs M_E en moteur ou en générateur d'au moins un moteur électrique pour influencer de façon appropriée des paramètres d'activité du système de catalyseur, **caractérisé en ce que** pour une température de catalyseur T_Kat située à l'intérieur d'une fenêtre de température prédéterminée TF1 et pour un courant massique de gaz d'échappement et/ou une émission brute d'au moins un composant des gaz d'échappement, qui est supérieur(e) à une valeur de seuil SW1, il est prévu un soutien moteur par le moteur électrique et il n'est prévu aucun soutien dans le cas où le dispositif d'accumulation d'énergie a accumulé moins d'énergie qu'une valeur de seuil prédéterminée E_SPmn.

2. Procédé selon la revendication 1, **caractérisé en ce que** l'on influence de matière appropriée une valeur d'un courant massique de gaz d'échappement et/ou d'une émission brute d'au moins un composant des gaz d'échappement, de préférence d'un oxyde d'azote, d'un hydrocarbure ou de monoxyde de carbone, par l'addition de couples moteurs M_E.

3. Procédé selon la revendication 1 ou 2, **caractérisé en ce que** le moteur à combustion interne permet un fonctionnement pauvre dans au moins une phase homogène ou stratifiée.

4. Procédé selon au moins une des revendications précédentes, **caractérisé en ce que** le système de catalyseur présente au moins un catalyseur à 3 voies ou un catalyseur à accumulation de NOx.

5. Procédé selon au moins une des revendications précédentes, **caractérisé en ce que** l'activité du catalyseur est **caractérisée par** une capacité d'accumuler des NOx ou une capacité d'accumuler de l'oxygène.

6. Procédé selon au moins une des revendications précédentes, **caractérisé en ce que** l'on règle une valeur d'une température de catalyseur T_Kat à l'intérieur d'une fenêtre de température prédéterminée TF par l'addition des couples moteurs M_E.

7. Procédé selon la revendication 6, **caractérisé en ce que** l'on respecte une limite supérieure d'un courant massique de gaz d'échappement et/ou d'au moins une émission brute de NOx, HC ou CO par l'addition des couples moteurs M_E.

8. Procédé selon au moins une des revendications précédentes, **caractérisé en ce que** pour une température de catalyseur T_Kat située à l'intérieur d'une fenêtre de température prédéterminée TF2 et un courant massique de gaz d'échappement et/ou une émission brute d'au moins un composant des gaz d'échappement qui dépasse une valeur de seuil SW2, il n'est pas prévu de soutien moteur.

9. Procédé selon la revendication 8, **caractérisé en ce qu'**il est prévu un soutien moteur dans le cas où le dispositif d'accumulation d'énergie a accumulé plus d'énergie qu'une valeur de seuil prédéterminée E_SPmx.

10. Procédé selon au moins une des revendications précédentes, **caractérisé en ce que** pour une température de catalyseur T_Kat située en dessous d'une température limite T_mn, il se produit un soutien en générateur dans le cas où l'on peut, à l'intérieur d'un intervalle de temps prédéterminé t_I, atteindre une valeur de la température de catalyseur T_Kat située dans une fenêtre de température TF3 et/ou un courant massique de gaz d'échappement et/ou une émission brute d'au moins un composant des gaz d'échappement inférieure à une valeur de seuil SW3.

11. Procédé selon au moins une des revendications précédentes, **caractérisé en ce que** pour une température de catalyseur T_Kat inférieure à une température limite T_mn1, il ne se produit pas de soutien en générateur dans le cas où l'on n'atteint pas, à l'intérieur d'un intervalle de temps prédéterminé t_I1, une valeur de la température de catalyseur T_Kat située dans une fenêtre de température TF4 et un courant massique de gaz d'échappement et/ou une émission brute d'au moins un composant des gaz d'échappement qui n'est pas inférieure à une valeur limite SW4.

12. Procédé selon au moins une des revendications précédentes, **caractérisé en ce que** des valeurs d'un déplacement du point de fonctionnement charge-nombre de tours du moteur à combustion interne sont corrélées dans un modèle avec des valeurs d'un courant massique de gaz d'échappement et/ou d'une émission brute d'au moins un composant des gaz d'échappement et elles sont prises en considération lors du dimensionnement de la production de couple moteur du moteur électrique pour diminuer la consommation d'énergie totale lors du fonctionnement du véhicule.

13. Procédé selon au moins une des revendications précédentes, **caractérisé en ce que** le fonctionnement du système de catalyseur et/ou le fonctionnement du dispositif d'accumulation d'énergie est corrélé dans un modèle avec une consommation d'énergie et il est pris en considération lors du dimensionnement de la production de couple moteur par le moteur électrique pour diminuer la consommation d'énergie totale pour le fonctionnement du véhicule.

14. Procédé selon au moins une des revendications précédentes, **caractérisé en ce que** le fonctionnement du système de catalyseur en ce qui concerne la fréquence de régénération d'un catalyseur et/ou le fonctionnement du dispositif d'accumulation d'énergie est corrélé dans un modèle avec une consommation d'énergie, et il est pris en considération lors du dimensionnement de la production de couple moteur par le moteur électrique pour diminuer la consommation d'énergie totale pour le fonctionnement du véhicule.

15. Procédé selon au moins une des revendications précédentes, **caractérisé en ce que** l'on déplace un point de fonctionnement du moteur à combustion interne en direction de charges plus faibles pour diminuer la fréquence de régénération d'un catalyseur.

16. Procédé selon la revendication 16, **caractérisé en ce que** la température de catalyseur T_Kat est située à l'intérieur d'une fenêtre de température prédéterminée T_F5.

17. Procédé selon au moins une des revendications précédentes, **caractérisé en ce qu'**il est prévu une récupération d'énergie électrique dans des phases de poussée du moteur à combustion interne pour charger le dispositif d'accumulation d'énergie.

18. Véhicule hybride avec un moteur à combustion interne et au moins un moteur électrique, pour fournir respectivement un couple moteur en vue de faire fonctionner le véhicule, en particulier pour pouvoir entraîner au moins une roue du véhicule, dans lequel une installation de gaz d'échappement avec un système de catalyseur pour au moins un composant des gaz d'échappement est associée au moteur à combustion interne et il est prévu un dispositif d'accumulation d'énergie pour l'accumulation et la restitution d'énergie électrique et il est prévu un dispositif, au moyen duquel on détermine une valeur d'au moins une activité du catalyseur et on la compare à au moins une valeur limite prédéterminée, dans lequel en fonction du résultat de la comparaison et d'une valeur d'état de l'accumulateur d'énergie, on opère une addition des couples moteurs M_E en moteur ou en générateur du moteur électrique pour influencer de façon appropriée au moins un paramètre d'activité du système de catalyseur, **caractérisé en ce que** le dispositif est configuré de telle façon que, pour une température de catalyseur T_Kat située à l'intérieur d'une fenêtre de température prédéterminée TF1 et pour un courant massique de gaz d'échappement et/ou une émission brute d'au moins un composant des gaz d'échappement, qui est supérieur(e) à une valeur de seuil SW1, il soit prévu un soutien moteur par le moteur électrique et qu'il ne soit prévu aucun soutien dans le cas où le dispositif d'accumulation d'énergie a accumulé moins d'énergie qu'une valeur de seuil prédéterminée E_SPmn.
